# EUROPÄISCHE PATENTSCHRIFT

(11) **EP 1 599 993 B1**
(45) Veröffentlichungstag und Bekanntmachung des Hinweises auf die Patenterteilung: **02.11.2016**
(21) Anmeldenummer: 04713838.3
(22) Anmeldetag: 24.02.2004
(51) Int. Cl.: H04L 29/06, H04L 29/08, H04L 29/12, G08C 17/02

(54) **FERNSTEUERBARE EINHEIT MIT TELEFON- UND INTERNETSCHNITTSTELLE**
REMOTE-CONTROLLED UNIT COMPRISING A TELEPHONE AND INTERNET INTERFACE
UNITE TELECOMMANDEE COMPORTANT UNE INTERFACE TELEPHONIQUE ET INTERNET

(30) Priorität: 24.02.2003 DE 10308032
(43) Veröffentlichungstag der Anmeldung: 30.11.2005
(73) Patentinhaber: Mobotix AG, 67722 Winnweiler (DE)
(72) Erfinder: HINKEL, Ralf, 67724 Höringen (DE)
(74) Vertreter: Vossius & Partner Patentanwälte Rechtsanwälte mbB
(86) Internationale Anmeldenummer: PCT/DE2004/000343
(87) Internationale Veröffentlichungsnummer: WO 2004/075524

(56) Entgegenhaltungen:
- WO-A-02/063854
- US-B1- 6 425 000

## Beschreibung

Die Erfindung betrifft das oberbegrifflich Beanspruchte und befaßt sich somit mit dem Zugriff auf fernsteuerbare Einheiten.

Fernsteuerbare Einheiten sind per se bekannt. Hierzu zählen beispielsweise Kameras, auf welche von außerhalb zugegriffen werden kann, um Bilder anzufordern, Ausschnitte zu verändern, die Kamera zu schwenken usw., aber auch Heizungssteuerungen, Teile eines Gebäudemanagementsystems, Telefonanlagen, Gegensprechanlagen, Schließanlagen, Kläranlagen, Brand- und/oder Einbruchmelder, Kühlanlagen oder -geräte etc. sind zum Teil bezüglich zum Beispiel ihrer Sollwerte fernsteuerbar und/oder bezüglich ihrer Istwerte abfragbar und können demgemäß als fernsteuerbare Einheiten aufgefaßt werden. Typisch ist es bei den erwähnten fernsteuerbaren Einheiten nicht erforderlich, eine dauerhafte Anbindung der Geräte an eine Datenfernübertragungsleitung wie eine ISDN-Leitung, eine analoge Telefonleitung oder dergleichen vorzusehen. Vielmehr wird es typisch ausreichend sein, immer nur dann eine Ansprechbarkeit zu gewährleisten, wenn das Gerät betätigt werden soll, etwa um Sollwerte zu verändern und/oder um Informationen abzufragen, etwa eine Reihe von Bildern einer Bildsequenz, wenn eine Szene über längere Zeit mit einer Kamera beobachtet wurde und die Bilder in der Kamera zwischengespeichert wurden.

Dabei kann es zudem wünschenswert sein, eine Fernbedienung eines Gerätes oder einer Einheit nicht stets von demselben Benutzungsgerät aus vorzusehen, sondern von mehreren und/oder örtlich nicht festen. Beispielsweise kann ein Benutzer fordern, ein Gerät wie eine Kamera über sein Funktelefon mit Bildübertragungsmöglichkeit bedienen bzw. abrufen zu können.

Es ist prinzipiell möglich, an ein Gerät, das sich nur temporär in ein Netz für die Datenfernübertragung wie das Internet einwählt, eine dynamische Adresse aus einem beschränkten Adressenpool eines Netzbetreibers zu vergeben. Wenn nun eine fernsteuerbare Einheit über eine solche Adresse angesprochen werden soll, ist wünschenswert, diese dynamische Adresse (dynamische IP-Adresse) für die Fernbedienung nutzbar zu machen. Eine erste Variante besteht darin, wie bei Internet-Messagern Verzeichnisse vorrätig zu halten, in welchen der jeweilige Benutzer sich mit einer festen Kennung eintragen lassen kann, um seine aktuell zugeteilte IP an andere Benutzer übertragen zu lassen, damit diese mit ihm kommunizieren können. Wenn eine solche Infrastruktur für eine sehr große Anzahl von Geräten von einem Provider vorgesehen werden muß, ist dies allerdings schon auf Grund der benötigten Datensicherheit usw. mit einem hohen Aufwand an Hardware verbunden, dessen Kosten prohibitiv sein können.

Aus der US 6,425,000 B1 ist ein Verfahren bekannt, um Aktionen eines Hostcomputers bei Anruf auszulösen.

Aus der US 2004/0081170 A1 sind ein Verfahren und eine Vorrichtung bekannt, um eine Informationskommunikationsfunktion eines entfernt angeordneten Vorrichtung auszulösen.

Es ist wünschenswert, bei fernsteuerbaren Einheiten, die nur temporär ferngesteuert werden müssen, die Nutzbarkeit einer fremdvergebenen, veränderlichen Adresse zu gewährleisten.

Die Aufgabe der vorliegenden Erfindung besteht darin, Neues für die gewerbliche Anwendung bereitzustellen. Bevorzugte Ausführungsformen finden sich in den Unteransprüchen.

Die vorliegende Erfindung schlägt somit in einem ersten Grundgedanken ein Verfahren nach Anspruch 1 vor.

Damit wurde erkannt, daß eine wesentliche Vereinfachung im Ansprechen der fernsteuerbaren Einheit dann erreicht wird, wenn eine Übertragung von Information betreffend die Informationsaustauschschnittstelle ausgelöst wird auf die Aktivierungsaufforderung am Aktivierungsmittel. Es wird so möglich, dynamisch erzeugte Informationen am Aktivierungsmittel bereitzustellen und danach abzuwarten, daß auf der Steuerseite, also nicht an der fernsteuerbaren Einheit selbst, sondern von jener Stelle aus, an der die Aktivierung veranlaßt wurde, mit diesen Daten ein Steuerungs- oder Ansprechprozeß eingeleitet wird.

Die fernsteuerbare Einheit kann als Melder wie als Einbruchsmelder, Feuermelder oder dergleichen ausgebildet sein, der fernsteuerbar etwa scharf geschaltet wird, oder beispielsweise als Gerätesteuerung, als Teil einer Gebäudemanagementeinheit insbesondere für eine Heizungssteuerung, Wechselsprech- oder Schließanlagen, Kläranlagen usw. Besonders bevorzugt ist es jedoch, die fernsteuerbare Einheit als Kamera auszubilden, also eine Kamera dergestalt auszubilden, daß sie aus der Ferne angesprochen werden kann, um sie zu schwenken, Bildausschnitte durch Zoomen einzustellen und/oder zwischengespeicherte Informationen wie Bilder oder Bildsequenzen usw. abzurufen. Eine besonders bevorzugte Variante sieht vor, daß als informationsaustauschschnittstellenbezogene Daten eine IP-Adresse eines web-fähigen Moduls in der fernsteuerbaren Einheit ausgegeben und im übrigen für den temporären Betrieb wie erforderlich gespeichert wird.

Die Einheit wird also typisch so ausgebildet sein, daß die Informationsaustauschschnittstelle eine fremdvergebene Adresse als solche erkennen kann, und daß ein Mittel zur Übertragung der fremdvergebenen Adresse an das Aktivierungsmittel vorhanden ist, um dort eine Übertragung der dynamischen IP-Adresse auf das Aktivierungsaufforderungssignal hin zu bewirken.

Die Informationsaustauschschnittstelle wird dabei bevorzugt für die zeitlich befristete Anbindung der Einheit an das Internet oder ein anderes, gegebenenfalls nur lokales Netz ausgebildet sein und insbesondere mit einer ISDN-, DSL-, GSM-, UMTS- oder anderen Schnittstelle ausgebildet sein.

Das Aktivierungsmittel wird dabei typisch so ausgebildet sein, daß es das Aktivierungssignal über einen Datenfernübertragungskanal empfangen kann. Bei letzterem·kann es sich insbesondere um eine weitere Telekommunikationsleitung handeln.

In Fällen wie den vorstehend als bevorzugt beschriebenen, in denen eine erste temporäre Verbindung zum Internet erfolgt und eine Aktivierung über eine zweite Telekommunikationsleitung möglich ist, sind der Aktivierungssignaleingangskanal und der Informationsaustauschkanal also getrennt voneinander.

Die Aktivierung kann dabei auf den Anruf von außen erfolgen. Eine erste Zugriffssicherung auf die fernsteuerbare Einheit ergibt sich dann dadurch, daß die Fernsprechnummer, über welche die fernsteuerbare Einheit ansprechbar ist, nicht jeder Person bekannt ist.

Es kann vorgesehen sein, eine Aktivierung erst dann zuzulassen, wenn sich der auf das Aktivierungsmittel über dessen Eingangskanal Zugreifende legitimiert hat. Dies kann beispielsweise geschehen durch Abfrage einer PIN-Nummer oder dergleichen, Eingabe eines Kennwortes, Identifikation über Spracherkennung usw. In einem solchen Fall wird erst dann, wenn die Legitimation des Zugriffs sichergestellt ist, eine Aktivierung vorgenommen. Bevorzugt kann die Aktivierung auch dazu ausgebildet sein, selektive Daten zu übertragen, die auf jene bezogen sind, welche auf der Informationsaustauschschnittstelle verfügbar sind. Beispielsweise kann bei einer Kamera, die eine interne Auswertung aufweist, Information darüber bereitgestellt oder übertragen werden, wann die letzte hochsignifikante Bildänderung aufgetreten ist. Dies kann geschehen, etwa nachdem ein Anrufer, der die Kamera betätigen möchte, sich bei dieser über den Aktivierungskanal eingewählt hat. Er erfährt so zunächst den Augenblick der letzten Änderung. Dann kann in der Kamera abgewartet werden, ob der Nutzer auf die übertragene Information bezüglich der letzten signifikanten Bildänderung hin entscheidet, daß die Bilder zu betrachten sind. Dies kann dadurch geschehen, daß ihm das Datum der letzten Änderung über eine Sprachausgabe mitgeteilt wird und er über ein Mehrtonwählverfahren eine von mehreren Aktionen wie die tatsächliche Aktivierung herbeiführt.

Das Aktvierungsmittel ist daher besonders bevorzugt zur Übertragung von Statusinformation ausgebildet, wobei dieser Status sich auf den Status eines Gerätes selbst beziehen kann, beispielsweise bei einer Heizung oder anderen technischen Anlage auf einen Fehlerstatus oder, bei Kameras oder dergleichen, auf einen Datenstatus.

Besonders bevorzugt ist es, wenn das Aktivierungsmittel nach der erfolgten Aktivierung der fernsteuerbaren Einheit über den Aktivierungskanal die fremdvergebene Ansprechadresse ausgibt. Dies kann dadurch geschehen, daß auf den aktivierenden Anruf hin oder eine aktivierende Eingabe nach einem Anruf und einer Legitimation über einen zweiten Kanal eine Datenverbindung zum Internet oder einem anderen lokalen Netzwerk aufgebaut wird und dann die von dort vergebene IP- oder andere Adresse über das Aktivierungsmittel auf dem Aktivierungskanal ausgegeben wird. Diese Ausgabe kann in einer Form erfolgen, die es dem fernsteuernden Benutzer erlaubt, problemfrei über das Internet oder das andere, jeweils verwendete Netz auf die fernsteuerbare Einheit zuzugreifen. So kann etwa bei einem bildfähigen Mobiltelefon mit der Möglichkeit eines Internetzugangs zunächst ein Anruf bei der fernsteuerbaren Einheit erfolgen, wobei über eine Tasteneingabe eine Zugriffslegitimation erfolgt, etwa indem eine dauerhaft feste oder veränderliche PIN eingegeben wird. Nach dieser optionalen Legitimationskontrolle baut dann die fernsteuerbare Einheit die Verbindung zum Internet auf und erhält vom angesprochenen Service-Provider eine dynamische IP-Adresse. Dieser Vorgang benötigt wenig Zeit. Wenn eine ISDN-Leitung bei der fernsteuerbaren Einheit vorliegt, so kann der aktivierende Anruf über den ersten ISDN-Kanal erfolgen und der Verbindungsaufbau über den zweiten ISDN-Kanal. Die erhaltene dynamische IP-Adresse wird dann auf dem Aktivierungsmittelkanal ausgegeben. Dies kann etwa in Form einer SMS-Nachricht auf das Mobiltelefon des Anrufers geschehen oder, bevorzugt, in Sprachform, wobei dem Benutzer die exakte IP-Adresse diktiert werden kann. Da lediglich wenig unterschiedliche Zeichen, nämlich Ziffern und Punkte angesagt werden müssen, ist die Sprachausgabeeinheit dabei besonders einfach zu halten. Der Benutzer kann nach Beendigung der Ansage der IP-Adresse den Aktivierungsanruf beenden und über sein mobiles Telefon oder einen lokal verfügbaren PC mit Internet-Zugang durch Eingabe der IP-Adresse auf die Kamera bzw. andere fernsteuerbare Einheit zugreifen und dort, nunmehr im Zugriff über das Internet, erforderliche Steuersignale senden, Statusinformationen in größerem Umfange abrufen und/oder Bilder empfangen, gespeicherte Bilder abrufen usw. Die fernsteuerbare Einheit wird dabei so ausgebildet sein, daß nach Ablauf einer vorgegebenen Zeitspanne nach einer Aktivierung oder einem Zugriff über das Internet eine Deaktivierung und Trennung einer Internet- oder Datenfernübertragungsverbindung erfolgt, wenn keine weiteren Aktionen am Informationsaustauschkanal erfaßt werden.

Während die Erfindung vorstehend beschrieben wurde und nachfolgend detailliert erörtert wird mit Bezug auf am Anmeldetag bekannte bzw. weit verbreitete Telekommunikationsstandards wie ISDN, DSL, GSM, UMTS, www usw. ist einsichtig, daß es nicht zwingend erforderlich ist, auf solche Standards Bezug zu nehmen, um die Erfindung zu implementieren. Vielmehr ist auch mit einer Vielzahl anderer Protokolle eine gute Implementierung möglich und es ist einzuschätzen, daß die Erfindung anpaßbar ist an eine Vielzahl weiterer, auch erst aufkommender Technologien. Es sei im übrigen darauf hingewiesen, daß eine weitere Möglichkeit auch dadurch besteht, die aktuell zugeteilte Internet-Adresse auf einer dem Benutzer bekannten web-site oder von dieser im Einzelfall zu bestimmenden web-site zu hinterlegen, damit von dort ein Zugriff erfolgen kann.

Die Erfindung wird im folgenden und beispielsweise anhand der Zeichnung beschrieben. In dieser zeigt:

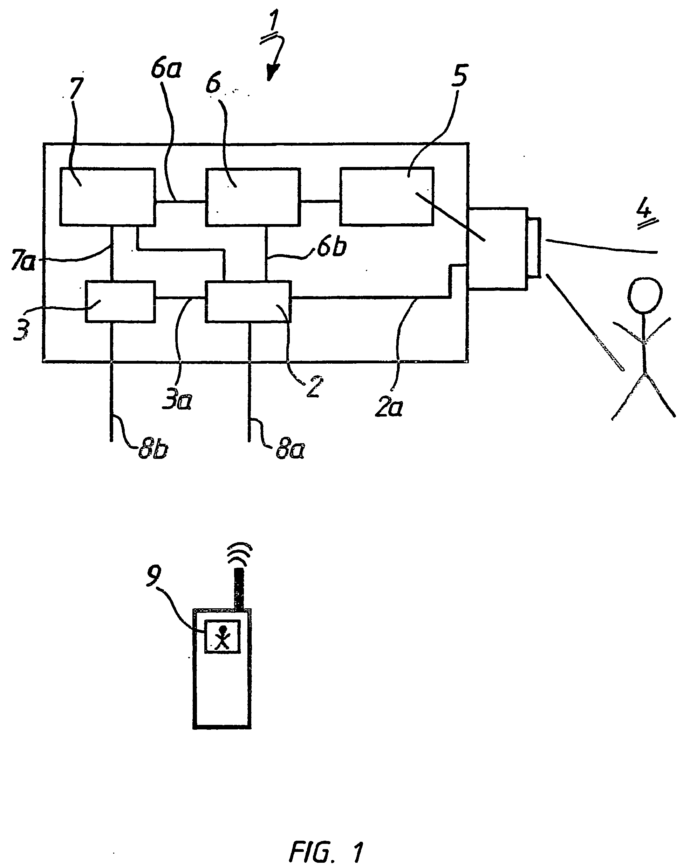

- Fig. 1: eine Anordnung mit einer fernsteuerbaren Einheit gemäß der vorliegenden Erfindung.

Nach Fig. 1 umfaßt eine allgemein mit 1 bezeichnete fernsteuerbare Einheit 1 eine veränderliche Adresse ansprechbarer Informationsaustauschschnittstelle 2 und ein davon verschiedenes Aktivierungsmittel 3 hierfür, wobei das Aktivierungsmittel für das Auslösen einer Übertragung von informationsaustauschschnittstellenbezogenen Daten auf ein Aktivierungsaufforderungssignal hin ausgebildet ist.

Im vorliegenden Fall handelt es sich bei der fernsteuerbaren Einheit 1 um eine Kamera, die eine Szene 4 beobachtet, und die empfangenen Bilder in einer Bildspeicherstufe 5 abspeichert. Der Bildspeicherstufe 5 ist eine Bilddatenkompressions- und -auswerteeinheit 6 zugeordnet, die einerseits Bildänderungen in Bildsequenzen detektiert und über eine Leitung 6a in einer Statussignalspeichereinheit 7 bereitstellt.

Die Informationsaustauschschnittstelle 2 ist als eine Einheit zum Ansprechen eines ISDN-Kanals 8a dazu ausgelegt, auf diesem gemäß üblicher Protokolle eine IP-Adresse von einem externen Server (nicht gezeigt) zu empfangen und einen Zugriff eines Benutzers über das Internet auf die fernsteuerbare Einheit 1 zuzulassen.

Die Informationsaustauschschnittstelle 2 ist dazu ausgelegt, im Ansprechen auf diesen Zugriff aus der Bilddatenspeichereinheit 6 über eine Leitung 6b Bildinformation abzurufen und weiterzuleiten sowie über Steuerleitungen 2a Kameraeinstellungen wie einen augenblicklichen Zoom-Faktor, eine Schwenkposition vermittels elektromotorischer Aktoren usw. einzustellen.

Das Aktivierungsmittel 3 ist dazu ausgebildet, über einen weiteren ISDN-Kanal 8b Aktivierungssignale zu empfangen, die beispielsweise über eine Einheit 9 wie ein Telefon oder dergleichen erzeugt werden können. Im Aktivierungsmittel 3 ist ein Legitimationskontrollmittel vorgesehen, das dazu ausgebildet ist, auf einen Anruf hin zunächst eine PIN abzufragen und erst nach erfolgreicher Zugriffslegitimation weiter mit einem Anrufer 9 Daten auszutauschen. Das Aktivierungsmittel 3 ist mit der Statussignalspeichereinheit mit einer Leitung 7a verbunden und empfängt von dieser auf die letzte Bildsequenzänderung bezogene Information über Leitung 7a. Das Aktvierungsmittel 3 ist weiter dazu ausgebildet, das Informationsaustauschmittel 2 zum Einwählen in das Internet bei einem Service-Provider (nicht gezeigt) zu veranlassen und von dort eine IP-Adresse zu empfangen. Die entsprechende Aufforderung kann über Leitung 3a vorgesehen werden. Weiter ist Leitung 3a dazu ausgebildet, nicht nur ein Einwählaufforderungssignal an das Informatonsaustauschmittel 2 zu übertragen, sondern auch eine über Kanal 8a von diesem empfangene, fremdvergebene IP-Adresse an das Aktivierungsmittel 3 zu übermitteln.

Das Aktivierungsmittel 3 ist weiter dazu ausgebildet, eine IP-Adresse, die ihr vom Informationsaustauschmittel 2 über Leitung 3a mitgeteilt wird, in Sprachform über den zweiten ISDN-Kanal 8b an den Anrufer 9, der die fernsteuerbare Einheit 1 betätigen möchte, auszugeben.

Die Einheit 9 ist im vorliegenden Fall gezeigt als ein mobiles Telefon mit Internet-Fähigkeit.

Die Anordnung wird verwendet wie folgt:

Zunächst ruft ein Anrufer bei der fernsteuerbaren Einheit auf der nur ihm bekannten Nummer an. Dieser Anruf wird auf dem zweiten ISDN-Kanal 8b entgegengenommen und das Äktivierungsmittel 3 fragt zunächst an, ob der Benutzer legitimiert ist. Dazu wartet das Aktvierungsmittel 3 der fernsteuerbaren Einheit eine vorgegebene Zeit lang auf die Eingabe einer PIN. Erfolgt diese Eingabe nicht oder mehrfach nicht richtig, wird die Verbindung am zweiten ISDN-Kanal 8b getrennt. Gegebenenfalls kann eine erwünschte Implementierung einer Zugriffsblockade für eine bestimmte Zeit nach einem oder mehrfachen erfolglosen Zugriffen von außen vorgesehen werden, um ein unbefugtes Austesten nicht bekannter PINs zu unterbinden.

Nach erfolgter Legitimationskontrolle wird hingegen über Leitung 7a aus dem Statussignalspeicher 7 abgerufen, wann sich die letzte signifikante Bilddatenänderung ergeben hat. Diese in das Aktivierungsmittel 3 übertragene Statusinformation wird in Sprachform an den Benutzer 9 mittels eines Sprachsynthesizers, der im Aktivierungsmittel 3 vorhanden ist, ausgegeben. Wenn dieser daraufhin feststellt, daß in jüngerer Zeit relevante Bildänderungen vorliegen könnten, betätigt er spezifische Tasten an seinem Mobiltelefon, um durch diese Mehrtonwahl das Aktivierungsmittel dazu zu veranlassen, über Leitung 3a die Informationsaustauschschnittstelle zum Einwählen ins Internet zu bewegen. Die Informationsaustauschschnittstelle 2 wählt sich daraufhin im freien ISDN-Kanal 8a in das Internet ein und erhält von einem angewählten Service-Provider eine dynamische IP-Adresse. Diese wird über die Leitung 3a dem Aktivierungsmittel mitgeteilt. Das Aktivierungsmittel 3 gibt diese Information an den vorhandenen Sprachsynthesizer weiter und der Sprachsynthesizer gibt die augenblickliche oder temporäre IP-Adresse in Sprachform auf das Mobiltelefon des Anrufers aus. Der Benutzer kann daraufhin die Verbindung auf Kanal 8b unterbrechen und sich selbst in das Internet einwählen, wozu sein Mobiltelefon 9 oder ein anderer PC geeignet sein kann und greift dann über die noch offene Leitung des Kanals 8a auf die fernsteuerbare Einheit zu, um dort Bilddaten abzurufen, die aus der Bilddatenspeichereinheit über Leitung 6b an die Informationsaustauschschnittstelle 2 übertragen werden und/oder Status- und/oder Steuerinformationen über den Kanal 8a an die entsprechenden Gerätemodule wie über Leitung 2a zu übertragen und so ein Schwenken, eine Zoomeinstellung usw. zu bewirken. Die fernsteuerbare Einheit 1 wird somit nach Aktivierung über das Aktivierungsmittel am ersten Kanal steuerbar auf dem zweiten Kanal.

Es sei erwähnt, daß an Stelle einer Sprachweitergabe über das Aktivierungsmittel 3 eine dynamisch vergebene IP-Adresse auf eine dem Nuzter bekannte und in der fernsteuerbaren Einheit 1 abgelegte web-site übertragen werden kann und/oder auf eine über das vom Benutzer verwendete Gerät 9 zur Aktivierung am Aktierungsmittel 3 mitgeteilte Web-site gesendet werden kann. In einem solchen Fall wird vom Aktivierungsmittel diese Übertragung von informationsaustauschschnittstellenbezogenen Daten auf das Aktivierungsaufforderungssignal hin ausgelöst.

Es sei auch erwähnt, dass Varianten möglich sind. So kann vorgesehen sein, dass zum Beispiel zur Verbindung zweier über dynamische Adressen ansprechbarer Einheiten, bei welcher vorgesehen ist, dass eine erste der Einheiten eine dynamische Adresse erhält, die gegebenenfalls dynamische Adresse der ersten Einheit über einen ersten Kanal an die zweite Einheit übertragen wird, die zweite Einheit eine dynamische oder feste Adresse erhält, die Verbindung unter Verwendung dieser und der ersten dynamischen Adresse auf einem insbesondere zweiten Kanal hergestellt und erforderlichenfalls der erste Kanal unterbrochen wird.

Gemäß dieser Variante der Erfindung wird somit zunächst über eine Aktivierung auf einem ersten Kanal, beispielsweise durch einen Anruf auf einem herkömmlichen Telefonkanal, ein login des fernsteuerbaren Gerätes ausgelöst. Das Auslösen kann alleine durch Anrufen einer nicht allgemein bekannten Telefonnummer, durch Übertragen von zusätzlichen Informationen während des Anrufes, durch Senden einer SMS oder dergleichen erfolgen. Unmittelbar nach dem Anruf kann der aktivierende Kanal unterbrochen werden und das aktivierte Gerät läßt sich, etwa bei Einwahl ins Internet, eine dynamische Adresse erteilen. Danach wird über einen geeigneten Kommunikationskanal die erhaltene IP - Adresse an die aktivierende Einheit übermittelt. Dies kann durch Senden einer SMS aus dem Netz, einen Anruf unter Verwendung der Internet - Verbindungen oder auf andere Weise geschehen. Das Aktivierungsmittel wird sich nach Erhalt der Information, die typisch sehr schnell übertragen wird, ihrerseits ins Netz einwählen und dann über dieses die fernaktivierte Einheit ansprechen. Der Vorteil der vorliegend beschriebenen Erfindungsvariante besteht darin, dass bei diesem Vorgehen stets nur ein einziger Kommunikationskanal erforderlich ist, also auch ohne ISDN-Zweikanalbetrieb eine Kommunikation aufgebaut werden kann.

## Patentansprüche

1. Verfahren zum Aufbau einer Datenaustauschverbindung auf einem Datenaustauschkanal worin
auf einem ersten Kanal (8b)
eine Kommunikationsaufforderung
entgegengenommen wird,
auf diese Aufforderung hin
auf einem zweiten Kanal
eine Verbindung
zum Erhalt einer dynamischen Adresse für
den Datenaustausch
aufgebaut und
eine dynamische Adresse erhalten wird,
daraufhin
über den ersten Kanal
die auf dem zweiten Kanal (8a) erhaltene
dynamische Adresse für den Datenaustausch
an einen Benutzer ausgegeben wird
und
abgewartet wird, dass
über den zweiten Kanal
unter der dynamischen Adresse
Kontakt
für den Datenaustausch
aufgenommen wird,
wobei
die dynamische Adresse als Sprachsignal, das unter Verwendung eines Sprachsynthesizers erzeugt wird, ausgegeben wird

2. Verfahren nach dem vorhergehenden Anspruch, **dadurch gekennzeichnet, dass** vor dem Aufbau der Verbindung zum Erhalt der dynamischen Adresse die Zugriffslegitimation kontrolliert wird, insbesondere durch Kontrolle einer empfangenen PIN-Nummer.

3. Fernsteuerbare Einheit (1), die zum Datenaustausch über einen Datenaustauschkanal gebildet ist, mit einem ersten und einem davon verschiedenen zweiten Kanal für die Kommunikation, **dadurch gekennzeichnet, dass**
sie dazu ausgebildet ist, auf dem ersten Kanal (8b) eine Kommunikationsaufforderung entgegenzunehmen, auf diese Aufforderung hin auf einem zweiten Kanal (8a) eine Verbindung zum Erhalt einer dynamischen Adresse für den Datenaustausch selbständig aufzubauen und eine dynamische Adresse zu erhalten, die auf dem zweiten Kanal erhaltene dynamische Adresse für den Datenaustausch auf dem ersten Kanal (8b) an einen Benutzer auszugeben und abzuwarten, dass über den zweiten Kanal (8a) unter der dynamischen Adresse Kontakt für den Datenaustausch aufgenommen wird,
wobei die fernsteuerbare Einheit weiter einen Sprachsynthesizer aufweist, um die dynamische Adresse als Sprachsignal an den Benutzer auszugeben.

4. Fernsteuerbare Einheit (1) nach dem vorhergehenden Anspruch, **dadurch gekennzeichnet, dass** sie als Melder und/oder für die Gerätesteuerung, das Gebäudemanagement, insbesondere die Heizungssteuerung Wechselsprech- und/oder Schließ- und/oder Telefonanlagen, Kläranlagen oder als Kamera ausgebildet ist.

5. Fernsteuerbare Einheit (1) nach einem der beiden vorhergehenden Ansprüche 3 oder 4, **dadurch gekennzeichnet, dass** sie zur selektiven Übertragung von Daten aus einer Vielzahl auf den zweiten Kanal (8b) bezogener Daten ausgebildet ist, insbesondere von Daten, die auf vorhergehende Änderungen und/oder auf Aktivierung hin verfügbare Informationen bezogen sind.

6. Fernsteuerbare Einheit (1) nach einem der Ansprüche 3 oder 4 oder 5, **dadurch gekennzeichnet, dass** sie zur Übertragung von Statusinformationen auf dem ersten Kanal ausgebildet ist, bei Ausbildung als Kamera insbesondere zur Übertragung von auf Bildänderungen bezogener Nichtbilddaten.

## Claims

1. Method for setting up a data interchange connection on a data interchange channel,
wherein
a communication request
is accepted
on a first channel (8b),
in response to this request,
a connection
for obtaining a dynamic address for
data interchange
is set up
on a second channel and
a dynamic address is obtained,
then
the first channel is used
to output the dynamic address, obtained on
the second channel (8a), for data interchange
to a user,
and
the method waits for
contact
for data interchange
to be made
via the second channel
under the dynamic address,
wherein
the dynamic address is output as a voice signal, which is produced using a voice synthesizer.

2. Method according to the preceding claim, **characterized in that** set-up of the connection for obtaining the dynamic address is preceded by the access legitimation being examined, particularly by examining a received PIN number.

3. Remotely controllable unit (1), which is formed for data interchange via a data interchange channel, having a first and a different second channel for communication,
**characterized in that**
it is designed to accept a communication request on the first channel (8b), in response to this request, to autonomously set up a connection for obtaining a dynamic address for data interchange on a second channel (8a) and to obtain a dynamic address, to output the dynamic address, obtained on the second channel, for data interchange on the first channel (8b) to a user and to wait for contact for data interchange to be made via the second channel (8a) under the dynamic address, wherein the remotely controllable unit further has a voice synthesizer in order to output the dynamic address as a voice signal to the user.

4. Remotely controllable unit (1) according to the preceding claim, **characterized in that** it is designed as a detector and/or for device control, buildings management, particularly heating control, intercom and/or locking and/or telephone systems, purification plants or as a camera.

5. Remotely controllable unit (1) according to either of the two preceding Claims 3 and 4, **characterized in that** it is designed for selective transmission of data from a multiplicity of data relevant to the second channel (8b), particularly of data that are relevant to previous changes and/or information available upon activation.

6. Remotely controllable unit (1) according to one of Claims 3, 4 and 5, **characterized in that** it is designed for transmitting status information on the first channel, and, when designed as a camera, particularly for transmitting non-image data relevant to image changes.

## Revendications

1. Procédé destiné à établir une liaison d'échange de données sur un canal de transmission de données, lors duquel
sur un premier canal (8b),
une invitation à la communication
est reçue,
suite à ladite invitation
sur un deuxième canal
une liaison
destinée à obtenir une adresse dynamique pour l'échange de données
est établie et
une adresse dynamique est obtenue
suite à quoi,
via le premier canal
l'adresse dynamique pour l'échange de données, obtenue sur le deuxième canal (8a)
est éditée à l'attention d'un usager
et
il est attendu que
via le deuxième canal,
sous l'adresse dynamique un contact est établi pour l'échange de données,
l'adresse dynamique étant éditée en tant que signal vocal qui est créé en utilisant un synthétiseur de la parole.

2. Procédé selon la revendication précédente, **caractérisé en ce qu'**avant l'établissement de la liaison pour obtenir l'adresse dynamique, la légitimation d'accès est contrôlée, notamment par contrôle d'un numéro de PIN réceptionné.

3. Unité télécommandable (1) qui est créée pour l'échange de données via un canal de transmission de données, avec un premier canal et un deuxième canal différent de celui-ci pour la communication, **caractérisée en ce**
**qu'**elle est conçue pour recevoir sur le premier canal (8b) une invitation à la communication, suite à cette invitation pour établir de Façon autonome sur un deuxième canal (8a) une liaison destinée à obtenir une adresse dynamique destinée à l'échange de données et pour obtenir une adresse dynamique, pour éditer à l'attention d'un usager l'adresse dynamique obtenue sur le deuxième canal destinée à l'échange de données sur le premier canal (8b) et pour attendre que via le deuxième canal (8a), sous l'adresse dynamique, un contact soit pris pour l'échange de données,
l'unité télécommandable comportant par ailleurs un synthétiseur de la parole, pour éditer l'adresse dynamique en tant que signal vocal à l'attention de l'usager.

4. Unité télécommandable (1) selon la revendication précédente, **caractérisée en ce qu'**elle est conçue en tant que détecteur et/ou pour commander des appareils, pour la gestion des bâtiments, notamment pour commander le chauffage, pour des interphones et/ou des systèmes de fermeture et/ou des installations téléphoniques, des stations d'épuration ou en tant que caméra.

5. Unité télécommandable (1) selon l'une quelconque des revendications 3 ou 4 précédentes, **caractérisée en ce qu'**elle est conçue pour la transmission sélective de données parmi une pluralité de données acquises sur le deuxième canal (8b), notamment de données qui se rapportent à des informations disponibles suite à des modifications précédentes et/ou à une activation.

6. Unité télécommandable (1) selon l'une quelconque des revendications 3 ou 4 ou 5, **caractérisée en ce qu'**elle est conçue pour la transmission d'informations de statut sur le premier canal, si elle est conçue en tant que caméra, notamment pour la transmission de données non images se rapportant à des modifications d'image.
